(19) **Europäisches Patentamt**
**European Patent Office**
**Office européen des brevets**

(11) **EP 3 514 704 A1**

(12) **EUROPEAN PATENT APPLICATION**

(43) Date of publication:
**24.07.2019 Bulletin 2019/30**

(51) Int Cl.:
**G06F 17/30** *(2006.01)* **H04L 29/08** *(2006.01)*
**G06F 9/48** *(2006.01)*

(21) Application number: **18152267.3**

(22) Date of filing: **18.01.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(71) Applicant: **Vestel Elektronik Sanayi ve Ticaret A.S.**
**45030 Manisa (TR)**

(72) Inventors:
• **ÖZDEN, Özlem**
  **45030 Manisa (TR)**
• **ATALI, Mehmet Akif**
  **45030 Manisa (TR)**

(74) Representative: **Flint, Adam**
**Page White & Farrer**
**Bedford House**
**John Street**
**London WC1N 2BF (GB)**

(54) **METHOD, DEVICE AND COMPUTER PROGRAM FOR SHARING PROCESSING OF DATA**

(57)    Processing of data is shared between a local computing device (3) and a remote computing device (5). Data received at the local computing device (3) is processed to generate a plurality of discrete data files. The discrete data files are allocated for processing by either the local computing device (3) or the remote computing device (5). The allocation of the discrete data files for processing by either the local computing device (3) or the remote computing device (5) is such as to minimise the total time required to process the discrete data files.

Fig. 1

**Description**

Technical Field

The present disclosure relates to a method, a device and a computer program for sharing processing of data between a local computing device and a remote computing device.

Background

Until relatively recently, any processing of computer data has been carried out locally, on a computer that is typically physically close to and associated with the user interested in the results of the data processing. More recently, so-called cloud computing enables users to send data to one or more remote computers for processing, typically over the Internet such that the remote computers are said to be located in the "cloud". The remote computers typically have high power processing and data storage abilities, enabling users to have relatively low power (and therefore inexpensive) local computers, which send the data to the remote computers for the intensive data processing which is required.

Summary

According to a first aspect disclosed herein, there is provided a method of sharing processing of data between a local computing device and a remote computing device in communication with the local computing device via a network, the method comprising:

    receiving data at the local computing device;
    processing the data received at the local computing device to generate a plurality of discrete data files each containing at least a portion of the data;
    allocating the discrete data files for processing by either the local computing device or the remote computing device such that some files are processed by the remote computing device and the remainder of the files are processed by the local computing device;
    uploading the files allocated to the remote computing device from the local computing device to the remote computing device for processing by the remote computing device; and
    receiving results of the processing by the remote computing device at the local computing device;
    wherein the allocation of the discrete data files for processing by either the local computing device or the remote computing device is such as to minimise the total time required to process the discrete data files.

Known systems tend to apply an "all or nothing" approach, in which either all data is processed locally by a device or all data is sent to a remote (cloud-based) server for processing. This can be inefficient as it does not take into account a number of factors that can have a bearing on the processing times that are required overall. Examples described herein take into account a number of technical factors to automatically determine the most time-efficient way to process the data. In particular, examples described herein effectively partition the data that is to be processed between a local computer and a remote computer so that the data can be processed in a time-efficient manner.

In an example, the allocation of the discrete data files for processing by either the local computing device or the remote computing device is such that the time taken to process the data files allocated to the local computing device is substantially equal to the time taken to upload the files to the remote computing device, process the data files allocated to the remote computing device and receive the results of the processing by the remote computing device.

In an example, the data received at the local computing device is image data.

In an example, the processing the image data received at the local computing device to generate a plurality of discrete data files comprises analysing the image data to identify objects in the image and cropping the image such that each generated data file corresponds to a different object in the image.

In an example, the processing of the discrete data files comprises carrying out facial recognition processing on the discrete data files.

In an example, the method comprises, after processing the data received at the local computing device to generate a plurality of discrete data files each containing at least a portion of the data, comparing the number of discrete data files with a threshold to determine whether to allocate any data files to the remote computing device for processing.

In an example, the threshold is the time taken to upload the files to the remote computing device and receive the results of the processing by the remote computing device divided by the time taken to process a data file by the local computing device.

According to a second aspect disclosed herein, there is provided a local computing device arranged to share processing of data between the local computing device and a remote computing device in communication with the local computing device via a network, the local computing device being arranged to:

> process data received at the local computing device to generate a plurality of discrete data files each containing at least a portion of the data;
> allocate the discrete data files for processing by either the local computing device or the remote computing device such that some files are processed by the remote computing device and the remainder of the files are processed by the local computing device;
> upload the files allocated to the remote computing device from the local computing device to the remote computing device for processing by the remote computing device; and
> receive results of the processing by the remote computing device at the local computing device;
> wherein the allocation of the discrete data files for processing by either the local computing device or the remote computing device is such as to minimise the total time required to process the discrete data files.

According to a third aspect disclosed herein, there is provided a computer program comprising instructions such that when the computer program is executed on a local computing device, the local computing device is arranged to:

> process data received at the local computing device to generate a plurality of discrete data files each containing at least a portion of the data;
> allocate the discrete data files for processing by either the local computing device or a remote computing device such that some files are processed by the remote computing device and the remainder of the files are processed by the local computing device;
> upload the files allocated to the remote computing device from the local computing device to the remote computing device for processing by the remote computing device; and
> receive results of the processing by the remote computing device at the local computing device;
> wherein the allocation of the discrete data files for processing by either the local computing device or the remote computing device is such as to minimise the total time required to process the discrete data files.

Brief Description of the Drawings

To assist understanding of the present disclosure and to show how embodiments may be put into effect, reference is made by way of example to the accompanying drawings in which:

> Figure 1 shows schematically an overview of an overall system in which aspects described herein may be employed; and
>
> Figure 2 shows schematically an example of a method as described herein.

Detailed Description

As briefly mentioned, so-called cloud computing enables users to send data to one or more remote computers for processing, typically over the Internet such that the remote computers are said to be located in the "cloud". The remote computers typically have high power processing and data storage abilities, enabling users to have relatively low power (and therefore inexpensive) local computers, which send the data to the remote computers for the intensive data processing which is required. However, known systems apply "all or nothing" approach, in which either all data is processed locally by a device or all data is sent to a remote (cloud-based) server for processing.

Examples described herein take into account a number of technical factors to automatically allocate processing of the data between a local computing device and a remote computing device so that the data is processed in a time-efficient manner. In particular, examples described herein effectively determine how much data should be processed locally by a device and how much data should be sent to a remote computer for processing so that, overall, the data can be processed in a time-efficient manner. This can also help to keep down costs as it can minimise costs associated with transmitting data to and receiving data from a remote server, and also the cost of "renting" the remote server, or paying for the processing time on the remote server, if the remote server is owned by a third party for example.

A specific example will now be described with particular reference to processing of images captured by a camera, including particularly where the images are of people and the processing includes some processing for facial recognition or similar purposes. Such processing is well known per se. However, aspects described herein may be applied to processing of images of other objects, and indeed may be applied in general to processing of any data. For example, sensors or cameras may be used to scan an environment to obtain enough data from which a 3D model can be generated. A computing device may then process this data to generate a 3D model of the environment and any objects present within the environment. Such processing is again well known per se.

As another example, the data to be processed may be data that is gathered by sensors, which take sensor readings of the environment or locality of the sensor. For example, there may be a number of sensors arranged to take measurements of pollution or contaminant levels or of temperature or humidity at various locations across a city or other geographically spaced environment, or in a manufacturing facility, etc. Such sensors are often battery-powered and thus have low power supply resources and may in any event have low processing power. The local device may be for example an "Internet of Things" or IOT device. In general, as used herein, an IoT device is a device that has an addressable interface (e.g. an Internet protocol (IP) address, a Bluetooth identifier (ID), a near-field communication (NFC) ID, etc.) and can transmit information to one or more other devices over a wired or wireless connection. IoT devices may in general include or be incorporated in for example sensors, refrigerators, ovens, microwaves, freezers, dishwashers, clothes washing machines, clothes dryers, furnaces, air conditioners, thermostats, televisions and other consumer electronic devices, light fixtures, vacuum cleaners, sprinklers, electricity meters, gas meters, etc.

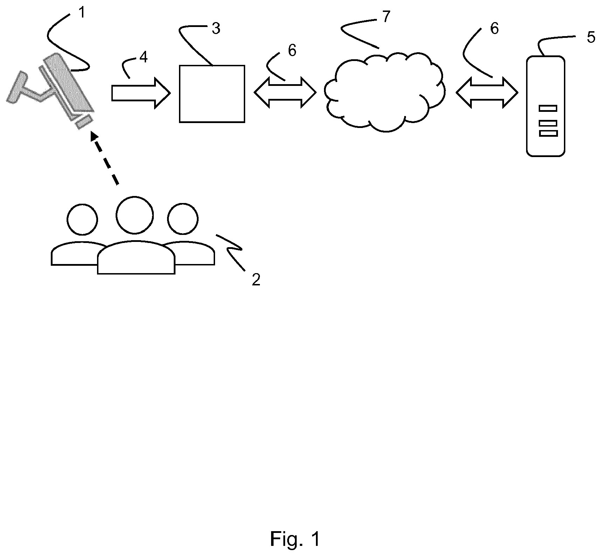

Turning now to Figure 1, this shows schematically an overview of an overall system in which aspects described herein may be employed. In particular, this example is concerned with a local device receiving images of people or other objects that are captured by a camera and which need to be processed.

Accordingly, Figure 1 shows schematically a camera 1, which may be a digital camera and which may be a standalone camera, such as a security camera or simply a user's personal camera, or a camera that is provided as part of some other device, such as a smartphone, a tablet computer, etc. The camera 1 is shown capturing images of a group of people 2.

The camera 1 sends the (digital) image data to a local computing device 3, over a wired and/or wireless connection 4. The local computing device 3 has the usual processor, memory, data storage, etc. (not shown). The local computing device 3 is typically physically close to the camera 1. For example, the local computing device 3 may be a computer that receives input from one or more security cameras 1 where the local computing device 3 and the one or more security cameras 1 are all in the same general location or building, such as an airport, a railway station, a shopping centre, a privately owned building, etc.

The local computing device 3 is able to connect to a remote server 5 over one or more networks 6. The one or more networks 6 may include the Internet 7 and may be or include wired or wireless networks. The remote server 5 has the usual processor, memory, data storage, etc. (not shown). The remote server 5 has high processing power and large data storage capacity (especially compared to the local computing device 3). The remote server 5 is typically located in some other location than the local computing device 3 and the camera 1.

The image data that is sent from the camera 1 is intended to be processed. The processing of the image data may be for a number of different purposes. In a specific example, the image data represents images of one or more people, though the image data may be images of other objects. In the case that the image data represents images of one or more people, the processing may be for facial recognition. This may be used for security purposes, in which the image of the face is compared with images in a database of facial images. Other examples include processing for eye iris recognition, processing to determine the mood or emotion of the people (including for example anger, fear, happiness, sadness, surprise, etc.), etc. Another example is to generate a 3D model of an environment and/or of objects within an environment.

As part of the processing, typically the image is analysed and images of one or more objects, such as people, in the camera image are cropped so as to produce discrete files for the or each object, such as a person, in the camera image. (Processes for this are well known per se.) The discrete image files, each corresponding respectively to a single object or person, are then processed according to the desired outcome of the processing. For example, for facial recognition purposes, typically the image of a person is analysed to identify various characteristics or "landmarks" which are then used to compare the image with images stored in a database. The characteristics may include for example one or more of the relative position, size, and/or shape of the eyes, nose, cheekbones, and jaw. The processing may alternatively or additionally use skin texture analysis which analyses visual details of the subject's skin.

In any event, the processing that is to be carried out on the image(s) provided by the camera 1 may in general be carried out by the local computing device 3 or by the remote server 5. Aspects described herein concern how to partition the processing between the local computing device 3 and the remote server 5 so as to enable the processing to be carried out in an optimum, efficient manner. This can be based on a number of factors. In a specific example, once it is determined that it would be most efficient for some processing to be carried out by the local computing device 3 and some processing to be carried out by the remote server 5, the data is portioned such that the processing carried out by the local computing device 3 and the remote server 5 takes the same time (also taking into account the time required to upload data to the remote server 5 for processing and to receive the results of that processing). This therefore minimises the total time that is required to process all of the data.

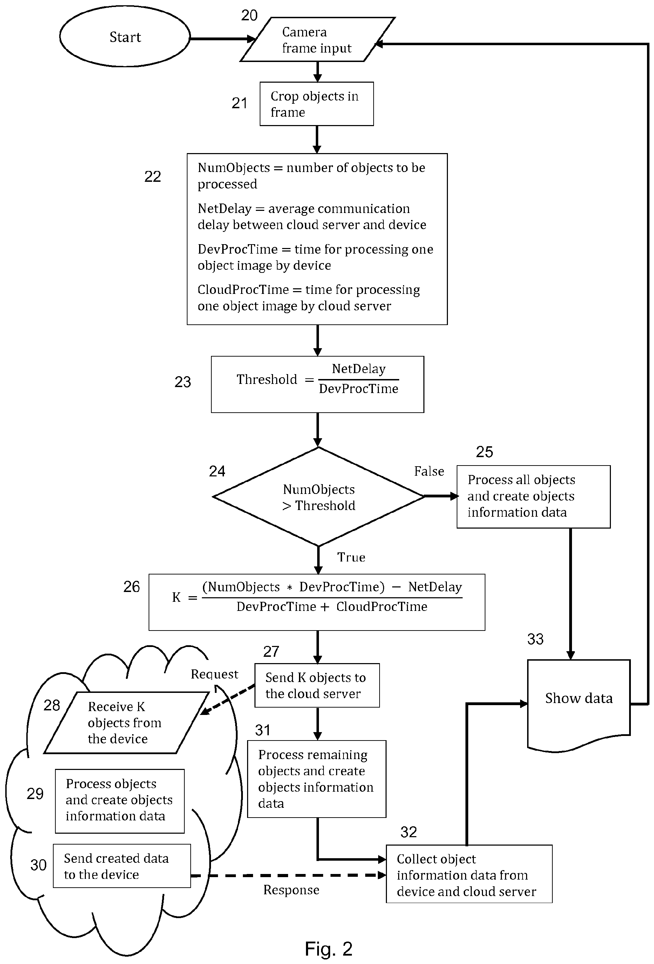

A specific example will now be described with reference to Figure 2. This specific example is in terms of processing images of objects, such as for example human faces, which have been captured by a camera 1.

Initially, the camera 1 captures an image and the camera image or "frame" is input 20 to the local computing device 3. The local computing device 3 analyses the captured image to identify one or more objects, such as people, in the camera image. Those images of the one or more objects are cropped at 21 so as to produce discrete files for the or each object, such as a person, in the camera image.

Values of a number of variables are obtained at 22. Some of these values may have been obtained or calculated previously, based on for example previous processing of images or during a preliminary testing or set-up phase.

In particular, a first variable is NumObjects, which is the number of objects to be processed. This is the number of discrete files obtained at the cropping stage, or at least a subset of those files that actually require processing.

A second variable is NetDelay. This is the average communication delay or time (in units of time, such as seconds) between the local computing device 3 and the remote server 5. In particular, in an example NetDelay is the sum of the time taken to upload an image file from the local computing device 3 to the remote server 5 and the time taken for the remote server 5 to return the results of the processing of an image file to the local computing device 3. In general, these time periods, particularly the time taken to upload an image file from the local computing device 3 to the remote server 5, will depend on the size of the image file and the bandwidth or data transfer speed of the network connection to the remote server 5. These times may each be an average or an estimate, based on for example experience of uploading of similar images by the local computing device 3 to the remote server 5 or obtained during a previous testing or set-up phase.

A third variable is DevProcTime. This is the time (in units of time, such as seconds) that is required for processing of one of the discrete image files by the local computing device 3. This processing time may be an average or an estimate, based on for example experience of processing of similar images by the local computing device 3 or obtained during a previous testing or set-up phase. The value of the DevProcTime may be different according to the nature of the individual the discrete image files to be processed. For example, an image file that is high resolution (having a large number of pixels) will in general require a longer processing time, and vice versa for lower resolution images.

A fourth variable is CloudProcTime. This is the time (in units of time, such as seconds) that is required for processing of one of the discrete image files by the remote server 5. Again, this processing time may be an average or an estimate, based on for example experience of processing of similar images by the remote server 5 or obtained during a previous testing or set-up phase. Again, the value of the CloudProcTime may be different according to the nature of the individual the discrete image files to be processed. For example, an image file that is high resolution (having a large number of pixels) will in general require a longer processing time, and vice versa for lower resolution images.

At 23, a threshold is calculated. In this example, the threshold is calculated by dividing the NetDelay (the average communication delay between the local computing device 3 and the remote server 5 as discussed above) by DevProcTime (the time that is required for processing of one of the discrete image files by the local computing device 3).

To illustrate this, and without intending this to present any limitation to the present disclosure, NetDelay may have a value in the range of for example 50 milliseconds to 1000 milliseconds or more, depending largely on the size of the image that is uploaded to the remote server 5 and the bandwidth of the connection. DevProcTime may range from a lower value of say 50 to 100 microseconds upwards, to say 1 or 2 seconds or more, depending on the processing power of the local computing device 3 and the nature or complexity of the processing that has to be carried out and the size of the image files. In this illustrative example therefore, the threshold may range from less than 1 to over say 20,000.

Then, at 24, a comparison is made between NumObjects, the number of objects to be processed, and the threshold calculated at 23.

If at 24 it is found that the number of objects to be processed is less than the threshold, then in effect it is determined that it would be most efficient for the processing of the discrete image files to be carried out by the local computing device 3. In that case, the flow passes to 25, during which the discrete image files are processed as required by the local computing device 3. The output of this processing is information data relating to the discrete image files. The information data will depend on the specific processing that is carried out, as discussed generally above.

On the other hand, if at 24 it is found that the number of objects to be processed is greater than the threshold, then in effect it is determined that it would be most efficient for the processing of the discrete image files to be carried out in part by the local computing device 3 and in part by the remote server 5. In particular, it is determined that it would be most efficient for the processing of some of the discrete image files to be carried out by the local computing device 3 and for the processing of the remainder of the discrete image files to be carried out by the remote server 5.

Having determined at 24 that the processing of some of the discrete image files should be carried out by the local computing device 3 and that the processing of the remainder of the discrete image files should be carried out by the remote server 5, at 26 it is determined how many of the discrete image files should be sent to the remote server 5 for processing by the remote server 5. In an example, this determination is based on, in essence, ensuring that the processing carried out locally by the local computing device 3 and the processing carried out by the remote server 5, including the upload and download times, are equal. That is, if K is the number of discrete image files that are to be sent to the remote server 5, then:

$$(\text{NumObjects} - K) * \text{DevProcTime} = (K * \text{CloudProcTime}) + \text{NetDelay}$$

Equation 1

This can be rearranged to obtain K as follows:

$$K = \frac{(\text{NumObjects} * \text{DevProcTime}) - \text{NetDelay}}{\text{DevProcTime} + \text{CloudProcTime}}$$

Equation 2

For completeness, it is mentioned that when it is stated that the processing carried out locally by the local computing device 3 and the processing carried out by the remote server 5, including the upload and download times, are "equal" (as set out in Equation 1), it will be understood that these respective times may be substantially equal. That is, these respective times should be equal within reasonable error margins and allowing for variations in both actual processing time and upload and download times: exact equality is unlikely to be achieved in practice. The amount of variation that may be acceptable or tolerated and yet achieve the desired objective may depend on specific implementations, the nature of the data files, the processing to be carried out, etc., etc. A variation of up to about 5% or 10% or so may be entirely acceptable for example.

The K number of discrete image files are sent to the remote server 5 at 27, with a request for the remote server 5 to process the discrete image files as required. The remote server 5 receives the K discrete image files at 28. At 29, the remote server 5 processes the discrete image files are processed as required. The output of this processing is information data relating to the discrete image files processed by the remote server 5. The information data will again depend on the specific processing that is carried out, as discussed generally above. At 30, the remote server 5 then sends the information data as a response to the local computing device 3.

In the meantime, and in an example substantially simultaneously with the processing of the discrete image files by the remote server 5, at 31 the local computing device 3 processes the other discrete image files that were not sent to the remote server 5. The output of this processing is information data relating to the discrete image files that were not sent to the remote server 5.

At 32, the local computing device 3 collects the information data that has been received from the remote server 5 for the and that has been generated locally by the local computing device 3.

At 33, the information data may be presented to a user, for example visually on a display screen, or otherwise presented or used as desired according to the purpose of the processing of the image data. This information data may be data that is generated at 25 when the local computing device 3 processes all of the discrete image files are processed or may be data that is collected at 32 and that is generated in part by the local computing device 3 and in part by the remote server 5.

The flow may then return to 1 to repeat the process as necessary or as required.

It is emphasised that whilst the description of the detailed specific example above has primarily been in terms of images of people or other objects, and accordingly is in terms or processing of image files, the processing that is carried out may be computer processing on other data that is present as discrete files, such that processing of some of the data may be carried out locally by the local computing device 3 and processing of other of the data may be carried out remotely by the remote server 5. Such data may be image data or in general any data that needs to be processed and that can be divided into discrete files (referred to generically as "objects" in Figure 2 and above). Nevertheless, examples described herein have particular application when image data is to be processed as image data is often large (that is, the file sizes are often large) and the processing that has to be carried out is often particularly intensive.

It will be understood that the processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors, a digital signal processor or processors, baseband circuitry and radio frequency circuitry, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Reference is made herein to data storage for storing data. This may be provided by a single device or by plural devices. Suitable devices include for example a hard disk and non-volatile semiconductor memory.

Although at least some aspects of the embodiments described herein with reference to the drawings comprise computer processes performed in processing systems or processors, the invention also extends to computer programs, particularly computer programs on or in a carrier, adapted for putting the invention into practice. The program may be in the form of non-transitory source code, object code, a code intermediate source and object code such as in partially compiled form, or in any other non-transitory form suitable for use in the implementation of processes according to the invention. The carrier may be any entity or device capable of carrying the program. For example, the carrier may comprise a storage medium, such as a solid-state drive (SSD) or other semiconductor-based RAM; a ROM, for example a CD ROM or a semiconductor ROM; a magnetic recording medium, for example a floppy disk or hard disk; optical memory devices in general; etc.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

**Claims**

1. A method of sharing processing of data between a local computing device and a remote computing device in communication with the local computing device via a network, the method comprising:

   receiving data at the local computing device;
   processing the data received at the local computing device to generate a plurality of discrete data files each containing at least a portion of the data;
   allocating the discrete data files for processing by either the local computing device or the remote computing device such that some files are processed by the remote computing device and the remainder of the files are processed by the local computing device;
   uploading the files allocated to the remote computing device from the local computing device to the remote computing device for processing by the remote computing device; and
   receiving results of the processing by the remote computing device at the local computing device;
   wherein the allocation of the discrete data files for processing by either the local computing device or the remote computing device is such as to minimise the total time required to process the discrete data files.

2. A method according to claim 1, wherein the allocation of the discrete data files for processing by either the local computing device or the remote computing device is such that the time taken to process the data files allocated to the local computing device is substantially equal to the time taken to upload the files to the remote computing device, process the data files allocated to the remote computing device and receive the results of the processing by the remote computing device.

3. A method according to claim 1 or claim 2, wherein the data received at the local computing device is image data.

4. A method according to claim 3, wherein the processing the image data received at the local computing device to generate a plurality of discrete data files comprises analysing the image data to identify objects in the image and cropping the image such that each generated data file corresponds to a different object in the image.

5. A method according to claim 3 or claim 4, wherein the processing of the discrete data files comprises carrying out facial recognition processing on the discrete data files.

6. A method according to any of claims 1 to 5, comprising, after processing the data received at the local computing device to generate a plurality of discrete data files each containing at least a portion of the data, comparing the number of discrete data files with a threshold to determine whether to allocate any data files to the remote computing device for processing.

7. A method according to claim 6, wherein the threshold is the time taken to upload the files to the remote computing device and receive the results of the processing by the remote computing device divided by the time taken to process a data file by the local computing device.

8. A local computing device arranged to share processing of data between the local computing device and a remote computing device in communication with the local computing device via a network, the local computing device being arranged to:

> process data received at the local computing device to generate a plurality of discrete data files each containing at least a portion of the data;
> allocate the discrete data files for processing by either the local computing device or the remote computing device such that some files are processed by the remote computing device and the remainder of the files are processed by the local computing device;
> upload the files allocated to the remote computing device from the local computing device to the remote computing device for processing by the remote computing device; and
> receive results of the processing by the remote computing device at the local computing device;
> wherein the allocation of the discrete data files for processing by either the local computing device or the remote computing device is such as to minimise the total time required to process the discrete data files.

9. A local computing device according to claim 8, arranged such that the allocation of the discrete data files for processing by either the local computing device or the remote computing device is such that the time taken to process the data files allocated to the local computing device is substantially equal to the time taken to upload the files to the remote computing device, process the data files allocated to the remote computing device and receive the results of the processing by the remote computing device.

10. A local computing device according to claim 8 or claim 9, arranged such that image data received at the local computing device is processed to generate a plurality of discrete data files by analysing the image data to identify objects in the image and cropping the image such that each generated data file corresponds to a different object in the image.

11. A local computing device according to any of claims 8 to 10, arranged such that the processing of the discrete data files comprises carrying out facial recognition processing on the discrete data files obtained from image data received at the local computing device.

12. A local computing device according to any of claims 8 to 11, arranged to, after processing the data received at the local computing device to generate a plurality of discrete data files each containing at least a portion of the data, compare the number of discrete data files with a threshold to determine whether to allocate any data files to the remote computing device for processing.

13. A local computing device according to claim 12, arranged such that the threshold is the time taken to upload the files to the remote computing device and receive the results of the processing by the remote computing device divided by the time taken to process a data file by the local computing device.

14. A computer program comprising instructions such that when the computer program is executed on a local computing device, the local computing device is arranged to:

> process data received at the local computing device to generate a plurality of discrete data files each containing at least a portion of the data;
> allocate the discrete data files for processing by either the local computing device or a remote computing device such that some files are processed by the remote computing device and the remainder of the files are processed by the local computing device;
> upload the files allocated to the remote computing device from the local computing device to the remote computing device for processing by the remote computing device; and
> receive results of the processing by the remote computing device at the local computing device;
> wherein the allocation of the discrete data files for processing by either the local computing device or the remote computing device is such as to minimise the total time required to process the discrete data files.

15. A computer program according to claim 14, comprising instructions such that the allocation of the discrete data files for processing by either the local computing device or the remote computing device is such that the time taken to process the data files allocated to the local computing device is substantially equal to the time taken to upload the files to the remote computing device, process the data files allocated to the remote computing device and receive the results of the processing by the remote computing device.

Fig. 1

EP 3 514 704 A1

20

Start

Camera
frame input

21 Crop objects in
frame

22 NumObjects = number of objects to be
processed

NetDelay = average communication
delay between cloud server and device

DevProcTime = time for processing one
object image by device

CloudProcTime = time for processing
one object image by cloud server

23 $\text{Threshold} = \dfrac{\text{NetDelay}}{\text{DevProcTime}}$

24 NumObjects
> Threshold

False

25 Process all objects
and create objects
information data

True

26 $K = \dfrac{(\text{NumObjects} * \text{DevProcTime}) - \text{NetDelay}}{\text{DevProcTime} + \text{CloudProcTime}}$

Request

27 Send K objects to
the cloud server

28 Receive K
objects from
the device

31 Process remaining
objects and create
objects information
data

29 Process objects
and create objects
information data

30 Send created data
to the device

Response

32 Collect object
information data from
device and cloud server

33 Show data

Fig. 2

11

Europäisches
Patentamt

European
Patent Office

Office européen
des brevets

# EUROPEAN SEARCH REPORT

Application Number

EP 18 15 2267

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/143811 A1 (RODRIGUEZ TONY F [US]) 16 June 2011 (2011-06-16) | 1,3-8, 10-14 | INV. G06F17/30 H04L29/08 G06F9/48 |
| Y | * paragraph [0104] - paragraph [0107] * * paragraph [0169]; figure 13 * * paragraph [0328] - paragraph [0350]; figure 19b * * paragraph [0384] - paragraph [0387] * ----- | 2,9,15 | |
| Y | US 2006/230149 A1 (JACKSON DAVID B [US]) 12 October 2006 (2006-10-12) * paragraph [0046] - paragraph [0056] * ----- | 2,9,15 | |
| A | US 2013/312006 A1 (HARDMAN DANIEL H [US] ET AL) 21 November 2013 (2013-11-21) * paragraph [0007] - paragraph [0010] * ----- | 1-15 | |
| A | US 2005/114860 A1 (LIN WUQIN [US] ET AL) 26 May 2005 (2005-05-26) * paragraph [0005]; figure 1 * ----- | 1-15 | |

TECHNICAL FIELDS
SEARCHED      (IPC)

G06F
H04L

The present search report has been drawn up for all claims

| Place of search | Date of completion of the search | Examiner |
|---|---|---|
| Berlin | 28 March 2018 | Bowler, Alyssa |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 18 15 2267

This annex lists the patent family members relating to the patent documents cited in the above-mentioned European search report.
The members are as contained in the European Patent Office EDP file on
The European Patent Office is in no way liable for these particulars which are merely given for the purpose of information.

28-03-2018

| Patent document cited in search report | | Publication date | Patent family member(s) | | Publication date |
|---|---|---|---|---|---|
| US 2011143811 | A1 | 16-06-2011 | US 2011143811 A1 | | 16-06-2011 |
| | | | US 2015011194 A1 | | 08-01-2015 |
| US 2006230149 | A1 | 12-10-2006 | CA 2603577 A1 | | 12-10-2006 |
| | | | EP 1872249 A2 | | 02-01-2008 |
| | | | EP 3203374 A1 | | 09-08-2017 |
| | | | ES 2614751 T3 | | 01-06-2017 |
| | | | US 2006230149 A1 | | 12-10-2006 |
| | | | US 2015326500 A1 | | 12-11-2015 |
| | | | WO 2006108187 A2 | | 12-10-2006 |
| US 2013312006 | A1 | 21-11-2013 | NONE | | |
| US 2005114860 | A1 | 26-05-2005 | US 2005114860 A1 | | 26-05-2005 |
| | | | US 2008263558 A1 | | 23-10-2008 |

EPO FORM P0459

For more details about this annex : see Official Journal of the European Patent Office, No. 12/82